# FASCICULE DE BREVET EUROPEEN

(11) **EP 1 052 076 B1**
(45) Date de publication et mention de la délivrance du brevet: **21.07.2004**
(21) Numéro de dépôt: 00490017.1
(22) Date de dépôt: 12.05.2000
(51) Int. Cl.: B29C 45/14, B60R 13/02

(54) **Composant décoratif et procédé de fabrication d'un tel composant décoratif et un procédé de fabrication d'une pièce d'habillage intérieur d'un véhicule, par exemple, un panneau de portière, utilisant ledit composant décoratif**
Dekorationselement und Verfahren zur Herstellung eines solchen Dekorationselementes und Verfahren zur Herstellung einer Kraftfahrzeuginnenverkleidung, zum Beispiel eine Türverkleidung, die ein solches Dekorationselement verwendet
Decorative element and method for producing such a decorative element and method for producing a vehicle interior lining, for example a door panel, using such a decorative element

(30) Priorité: 12.05.1999 FR 9906248
(43) Date de publication de la demande: 15.11.2000
(73) Titulaire: VISTEON SYSTEMES INTERIEURS S.A.S., 92927 La Défense Cédex (FR)
(72) Inventeur: Piec, Emmanuel, c/o Visteon Systèmes Interieurs, 62440 Harnes (FR); Delattre, Jean-Yves, Visteon Systèmes Interieurs, 62440 Harnes (FR)
(74) Mandataire: Duthoit, Michel

(56) Documents cités:
- EP-A- 0 488 121
- EP-A- 0 585 799
- DE-A- 4 316 438
- DE-A- 4 431 797
- DE-A- 19 818 881
- DE-A- 19 827 706
- FR-A- 2 724 214

## Description

L'invention concerne un composant décoratif, notamment destiné à être intégré dans une pièce d'habillage intérieur d'un véhicule, ainsi qu'un procédé de fabrication d'un tel composant décoratif, une utilisation de celui-ci et un procédé de fabrication d'une pièce d'habillage intérieur d'un véhicule, par exemple un panneau de portière, mettant en oeuvre ledit composant décoratif.

Toutefois, bien que plus particulièrement destiné à de tels procédés de fabrications, le composant conforme à l'invention pourra également être utilisé pour la fabrication d'autres types de pièces.

Actuellement, il est connu des pièces d'habillage intérieur de véhicules constituées d'une couche de matière, dite porteur, présentant localement au moins une zone d'aspect.

Ladite zone d'aspect est définie par un composant constitué d'une feuille de matière, le plus souvent textile, et assujettie à un insert, rigidifiant prévu sous l'ensemble de la face de ladite feuille opposée à sa face visible. Ledit composant est fixé sur le porteur, les deux pièces étant réalisées préalablement et séparément, aux formes désirées.

De tels procédés nécessitent ainsi des opérations de reprise dudit composant décoratif, ce qui augmente les temps de fabrication de la pièce d'habillage. En outre, la fixation du composant sur le porteur est le plus souvent réalisée par collage, soudage, agrafage et/ou vissage, alors que de tels modes de fixations peuvent se révéler insuffisants. En effet, avec ces solutions, les bords du composant restent fragiles et/ou des plis apparaissent parfois à sa surface.

C'est par exemple le cas de la boite à gants divulguée dans le document DE-43 16 438. Cette boîte à gants comprend une peau rigidifiée par une âme en matière plastique munie d'une surépaisseur. Cette surépaisseur est recouverte par une partie de la peau dont la marge se termine par un bandeau de matière de même nature que celle de l'âme. Ce bandeau est destiné à permettre l'accrochage de la marge de la peau sur l'âme, après rembordement de la surépaisseur.

On rencontre diverses difficultés avec ce vide-poches, notamment du point de vue esthétique puisque l'accrochage du bandeau de matière à l'âme est fait par soudage ou vissage.

Cela étant, afin d'éviter d'avoir à effectuer des reprises, il a été développé des procédés selon lesquels le porteur est réalisé directement sous le composant, préalablement constitué et, placé dans un outil de moulage du porteur. Ledit porteur est alors réalisé par injection à partir de différents points d'introduction de la matière.

Néanmoins, de telles solutions entraînent la présence de lignes de soudure au niveau des zones de rencontre des flux de matière injectée, qui peuvent se trouver en partie visibles, et/ou entraînent des difficultés de mise en oeuvre, notamment en raison des pressions élevées qu'elles peuvent nécessiter et qui risquent d'endommager la zone d'aspect.

Le document EP-0.488.121 concerne un composant de tableau de bord constitué d'une feuille de moquette rigidifiée par une couche d'un matériau plastique moulé directement sur la feuille de moquette. On retrouve dans ce document les désavantages liés à la formation d'un dos en matière plastique accolé à une feuille de moquette : l'apparition de plis à la surface de la moquette ainsi que le risque de déchirure. De plus, le procédé implique un matériel fort complexe puisqu'il met en oeuvre l'injection d'un gaz pour repousser le matériau plastique à l'intérieur du moule de fabrication.

Ainsi, il faut veiller à ce que le revêtement ne se froisse pas, ne se déchire pas, et ne soit pas excessivement comprimé, ce qui pourrait lui donner un aspect lustré indésirable.

Le but de la présente invention est de proposer un composant décoratif, comprenant une feuille de matière présentant un aspect esthétique, et un procédé de fabrication d'une pièce d'habillage intérieur d'un véhicule utilisant un tel composant décoratif, qui pallient les inconvénients précités en facilitant un positionnement et/ou une fixation optimale de ladite feuille de matière, ceci même à sa périphérie.

Un autre but de la présente invention est de proposer un composant décoratif et un procédé de fabrication d'une pièce d'habillage intérieur d'un véhicule utilisant un tel composant qui permettent d'éviter les reprises.

Un autre but de la présente invention est de proposer un composant décoratif et un procédé de fabrication d'une pièce d'habillage intérieur d'un véhicule qui permettent d'éviter, lors du montage du composant, l'apparition de lignes de soudure, tout au moins en partie visibles.

Un autre but de la présente invention est de proposer un composant décoratif et un procédé de fabrication d'une pièce d'habillage intérieur d'un véhicule utilisant un tel composant qui permettent de mettre en oeuvre des faibles pressions lors des fabrications.

Un autre but de la présente invention est de proposer un composant décoratif et un procédé de fabrication d'une pièce d'habillage intérieur d'un véhicule qui permettent des gains de matière et une simplification de l'outillage à mettre en oeuvre.

D'autres buts et avantages de l'invention apparaîtront au cours de la description qui va suivre qui n'est donnée qu'à titre indicatif et qui n'a pas pour but de la limiter.

L'invention concerne tout d'abord un composant décoratif, destiné à constituer une pièce d'habillage ou à être intégré dans une pièce d'habillage intérieur d'un véhicule, constitué au moins d'une feuille de matière, et présentant au moins localement, sur au moins une de ses faces, dites faces d'aspect, un aspect esthétique et/ou de confort, caractérisé par le fait que la feuille de matière est uniquement munie de moyens de rigidification, lesdits moyens de rigidification sont constitués d'un cordon, continu ou discontinu, de matière, prévu sur la face de la feuille de matière opposée à sa face d'aspect sur une partie au moins de la périphérie de ladite feuille pour figer sa forme selon la forme voulue pour ledit composant.

L'invention concerne également un procédé de fabrication d'un tel composant, dans lequel on met en forme ladite feuille selon un profil désiré et on réalise ledit cordon périphérique et une utilisation dudit composant dans un outil vis-à-vis duquel ledit composant est maintenu et positionné par ledit cordon périphérique.

L'invention concerne, en outre, un procédé de fabrication d'une pièce d'habillage intérieur d'un véhicule, par exemple panneau de portière, constitué d'une couche de matière, dite porteur, présentant localement au moins une zone d'aspect caractérisée par le fait que :
- on réalise, lors d'une première étape, un composant décoratif tel que décrit plus haut,
- on assure, lors d'une seconde étape, distincte de la première, la liaison entre ledit porteur et ledit composant décoratif de manière à ce que la zone d'aspect de ladite pièce soit définie au moins en partie par ladite face d'aspect du composant.

L'invention sera mieux comprise à la lecture de la description suivante, accompagnée des dessins en annexe qui en font partie intégrante et parmi lesquels :
- la figure 1 décrit, en vue de face, une pièce d'habillage obtenue selon un exemple de mise en oeuvre du procédé conforme à l'invention,
- la figure 2a est une vue de coupe partielle selon la ligne IIₐ.IIₐ représentée à la figure 1 précédente, illustrant un exemple de réalisation du composant conforme à l'invention,
- la figure 2b est une vue de coupe partielle selon la ligne II_{b}-II_{b} représentée à la figure 1 précédente illustrant une autre partie du composant de la figure 2,
- la figure 3 est une vue de coupe illustrant un exemple d'outillage pour la mise en ouvre du procédé de fabrication, conforme à l'invention, du composant décoratif représenté à la figure 2 précédente,
- la figure 4 est une vue de coupe illustrant un exemple d'outillage pour la fabrication de la pièce d'habillage représentée à la figure 1 précédente,
- la figure 5 illustre une pièce d'habillage obtenue selon une variante de mise en oeuvre du procédé de fabrication de pièce d'habillage conforme à l'invention.

L'invention concerne tout d'abord un composant décoratif, notamment destiné à être intégré dans une pièce d'habillage intérieur d'un véhicule. Toutefois, bien que plus particulièrement prévu pour de telles applications, ledit composant pourra également être utilisé dans d'autres types de pièces.

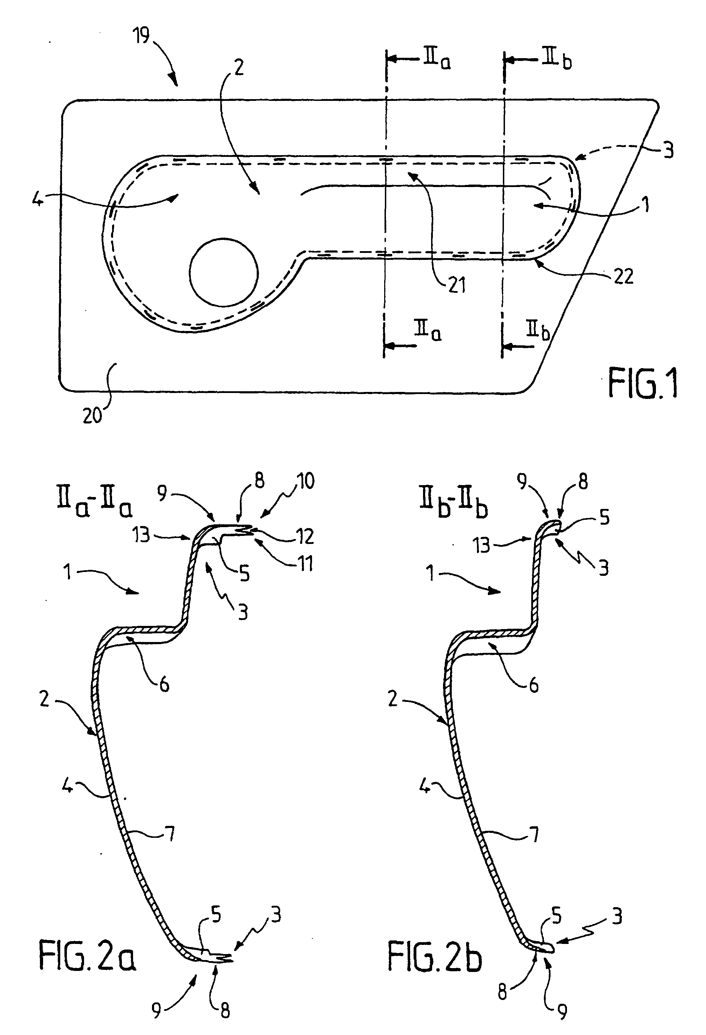

Comme illustré aux figures 1 et 2, ledit composant décoratif, repéré 1, est constitué au moins d'une feuille de matière 2 munie de moyens de rigidification 3. Ladite feuille de matière présente en outre, au moins localement, sur au moins une de ses faces 4, dite face d'aspect, un aspect esthétique et/ou de confort. On entend par là que ladite feuille de matière 2 est agréable à la vue et/ou au toucher, tout au moins localement au niveau de sa ou sesdites faces d'aspect 4.

Pour cela, ladite feuille de matière 2 est prévue, par exemple, souple et/ou en matériaux textiles. Par « souple », on entend que ladite feuille de matière se déforme de par sa nature ou sa consistance, notamment sous son propre poids. Elle ne peut donc pas conserver par elle-même, après déformation, une forme donnée ou même un contour présentant un profil donné, si elle n'est pas maintenue.

Selon l'invention, lesdits moyens de rigidification 3 sont constitués par un cordon 5, continu ou discontinu, de matière. Ledit cordon 5 est prévu sur une partie au moins de la périphérie de ladite feuille 2 et permet ainsi de figer sa forme selon la forme voulue pour ledit composant.

On peut donc obtenir une fixation optimale de la feuille de matière 2 sur ses moyens de rigidification 3, sans pression excessive, puisque cette fixation n'est réalisée qu'au niveau de la périphérie de la feuille, c'est-à-dire à l'endroit où elle est nécessaire mais aussi suffisante.

De plus, lors du montage dudit composant sur une autre pièce, la partie de cette dernière se trouvant sous ledit composant, peut n'avoir qu'un rôle de maintien en forme dudit composant, sans ne plus avoir à jouer forcément un rôle supplémentaire de fixation.

Il est également à noter que ledit cordon 5 pourra permettre d'éviter les reprises lors des utilisations ultérieures dudit composant 1 en offrant une zone d'assemblage directe de ce dernier sur la ou les autres parties de la pièce à monter.

En outre, ledit cordon 5 pourra notamment jouer un rôle de barrière entre les flux de matière éventuellement mis en oeuvre pour constituer ladite pièce et permettra alors d'éviter l'apparition de lignes de soudure, tout au moins en partie visibles. Il pourra aussi participer à la mise en tension de la feuille de matière 2, par une pression de la matière sur la partie interne du cordon, telle un « effet de piston ».

Ledit cordon 5 est distinct de ladite feuille de matière 2. Il est constitué, d'un ou plusieurs matériaux, par exemple, différents de celui ou ceux employés pour ladite feuille, notamment de matières thermoplastiques.

Selon un premier mode de réalisation, ledit composant 1 est sensiblement plan et ledit cordon 5 s'inscrit alors dans le plan dans lequel est tendue ladite feuille de matière 2.

Selon un autre mode de réalisation, illustré par celui représenté aux différentes figures, ledit composant présente un profil en relief, notamment en creux et/ou en bosse. Ledit cordon 5 suit alors une trajectoire gauche permettant de conférer à ladite feuille de matière 2 le profil voulu ou tout au moins de figer son contour selon ladite trajectoire. Ainsi, la dite feuille pourra ultérieurement reprendre ledit profil, notamment dès qu'elle sera placée en vis-à-vis d'une empreinte de même forme, par exemple située au niveau du poinçon et/ou de la matrice d'un moule, la matière de ladite feuille se plaçant d'elle-même à l'endroit voulu, grâce au contour imposé par ledit cordon.

Ledit composant comprend, par exemple, localement un ou des pavés de matériaux 6, notamment de mousse, présentant une certaine souplesse assujettie à ladite feuille de matière 2.

Ledit cordon 5 est prévu, par exemple, sur la face 7 de la feuille de matière 2 opposée à sa face d'aspect 4. Il en est de même, notamment, du ou des éventuels pavés de matériaux 6.

Les bords de ladite feuille de matière 2 sont assujettis, par exemple, au niveau d'une partie dudit cordon 5 formant une jupe 8 pour ledit composant 1. Ladite feuille de matière 2 recouvre ainsi éventuellement, au moins en partie, la face latérale extérieure 9 dudit cordon 5.

Ledit composant 1 pourra en outre comprendre au niveau dudit cordon 5 des moyens de positionnement 10, discontinus ou continus, dudit composant.

Selon un premier mode de réalisation, il s'agit de la forme conférée au bord distal 11 dudit cordon 5 prévu éventuellement biseauté et muni de marches d'escalier.

Selon un autre mode de réalisation, lesdits moyens de positionnement 10 sont constitués, comme représentés, par des encoches 12 prévues, notamment dans la masse, au niveau dudit bord distal 11 du cordon 5. Lesdites encoches 12 sont définies, par exemple, dans la largeur dudit cordon 5 par deux pattes en vis-à-vis, espacées l'une de l'autre.

Grâce audits moyens de positionnement 10, on peut ainsi simplifier l'outillage.

A titre d'exemple, selon le mode de réalisation illustré, on constate ainsi que ledit cordon 5 présente un bord proximal 13 en contact avec ladite feuille de matière 2, opposé audit bord distal 11, prévu muni desdits moyens de positionnement 10, la face latérale du cordon 5 prévue extérieurement entre lesdits bords distaux et proximaux 11, 13 étant recouverte, au moins partiellement, des bords de ladite feuille de matière 2.

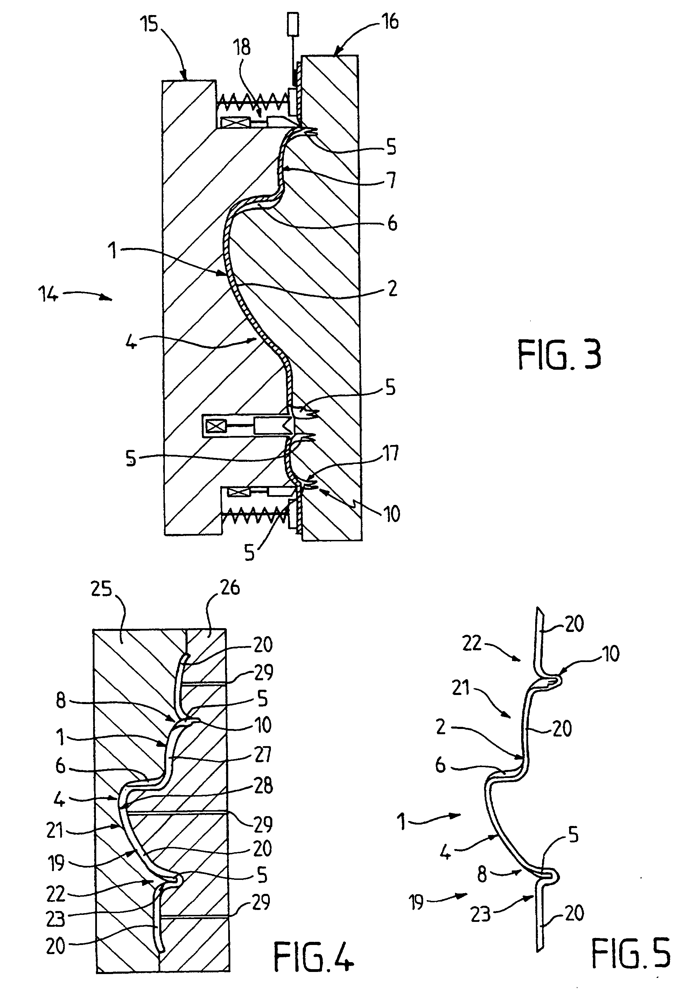

Comme illustré à la figure 3, l'invention concerne également un procédé de fabrication d'un composant décoratif 1, tel que décrit plus haut. Selon ce procédé, on met en forme ladite feuille de matière 2 selon un profil désiré et on réalise ledit cordon périphérique 5, permettant ainsi de fixer ledit profil. Ces deux étapes ont lieu, par exemple, successivement.

La mise en forme de ladite feuille de matière 2 peut être favorisée à la périphérie, sur tout ou partie, du moule, voire sur des zones intérieures, à l'aide de moyens d'assistance, tels que notamment des serre-flancs ou un cadre à picots ou similaires.

Ledit cordon 5 est réalisé, notamment, par moulage par injection et/ou extrusion dans un moule 14 où ladite feuille de matière 2 a préalablement été mise en forme. Selon un autre mode de mise en oeuvre, il pourra être réalisé préalablement puis encollé sur ladite feuille de matière 3.

On pourra éventuellement découper une ou des portions de feuille de matière 2, prévue en excès au delà du cordon 5. On obtient ainsi des gains supplémentaires de matière, la découpe pouvant être réalisée de manière précise au niveau dudit cordon 5.

En outre, lors de ladite découpe, on pourra appliquer les bords de ladite feuille de matière 2 au niveau de la jupe 8.

Pour mettre en oeuvre un tel procédé, ledit moule 14 est constitué, notamment, de deux parties 15, 16 présentant au niveau de leurs surfaces de contact le profil désiré pour le composant 1.

L'une 16 des dites parties du moule 14 est munie, par exemple, de gorge 17 permettant la formation dudit cordon 5.

La partie opposée 15 est munie de moyens de découpe 18 pour le découpage des bords de la feuille de matière 2.

Ainsi, à titre d'exemple, pour former ledit composant décoratif 1, on suit les étapes suivantes : on ouvre le moule 14, on dispose la feuille de matière 2 entre ses deux parties 15, 16 et on ferme ledit moule 14. On injecte ledit cordon 5 sous ladite feuille de matière 2 puis on découpe les éventuels excès de ladite feuille de matière, puis on ouvre le moule 14.

L'invention concerne aussi une utilisation dudit composant décoratif dans un outil vis-à-vis duquel ledit composant est maintenu et positionné par ledit cordon périphérique. Cela pourra être la cas de l'outil 24 évoqué plus bas.

Comme illustré aux figures 4 et 5, l'invention concerne également un procédé de fabrication d'une pièce d'habillage intérieur d'un véhicule, par exemple, panneau de portière.

Ladite pièce d'habillage, repérée 19, est constituée d'une couche de matière 20, dite porteur, présentant localement au moins une zone d'aspect 21.

Selon l'invention, pour fabriquer ladite pièce, on réalise, lors d'une première étape, un composant décoratif 1, tel que décrit plus haut, éventuellement selon le procédé de fabrication précédemment évoqué.

On assure ensuite, lors d'une seconde étape distincte de la première, la liaison entre ledit porteur 20 et ledit composant décoratif 1 de manière à ce que la zone d'aspect 21 de ladite pièce 19 soit définie au moins en partie par ladite face d'aspect 4 dudit composant 1.

On réalise ainsi une pièce d'habillage dans laquelle, comme déjà évoqué, la zone d'aspect est positionnée et/ou fixée de manière optimale sur le porteur 20, par l'intermédiaire dudit cordon 5, ceci sans reprise et en diminuant les risques d'apparition de lignes de soudure entre les différentes parties dudit porteur 21.

En outre, ce dernier n'ayant plus qu'un rôle de positionnement et/ou de maintien en forme de la feuille de matière 2, et non plus un rôle de fixation de celle-ci, les pressions dans l'outillage peuvent être plus faibles et on évite les risques d'endommagement de ladite feuille de matière 2.

Ledit porteur 20 est réalisé, par exemple, par injection et/ou par extrusion/compression et/ou thermocompression. Il est prévu, notamment, sous ledit composant 1 et/ou il définit un cadre au moins partiel, autour de celui-ci.

Selon un mode de réalisation, illustré à la figure 4, ledit porteur 20 est assujetti audit cordon 5 au niveau de leurs chants respectifs.

Selon un autre mode de réalisation, illustré à la figure 5, ledit porteur 20 est en outre surmoulé au dessus du bord distal 11 dudit cordon 5.

Ainsi, on assure la liaison entre ledit composant 1 et ledit porteur 20, par exemple, au moins au niveau du cordon 5 dudit composant 1.

Selon un mode de réalisation particulier de l'invention, on forme une gorge 22 au niveau d'une zone de contact entre ledit cordon 5 et une partie visible dudit porteur 20, le bord de ladite feuille de matière 4 étant prévue insérée dans ladite gorge 22. On améliore ainsi encore la finition de la pièce d'habillage.

Ladite gorge 22 est réalisée en prévoyant, en vis-à-vis de la jupe 8 du composant 1, une jupe 23 en vis-à-vis sur le porteur 20.

On pourra assurer le positionnement relatif du composant 1 dans ladite pièce d'habillage 19 grâce audit cordon 5, notamment muni desdits moyens de positionnement 10.

En cas d'utilisation de pavés 6 de matériaux, ceux-ci sont fixés à ladite feuille de matière 2, par exemple, lors de ladite première étape, c'est-à-dire, dans ledit moule 14 de fabrication du composant 1.

Pour mettre en oeuvre ledit procédé de fabrication de la pièce d'habillage 19, on pourra utiliser, notamment un second moule 24 en deux parties 25, 26, entre lesquelles un entrefer 27 est défini pour la réalisation du porteur 20.

L'une 25 des parties dudit second moule 24 présente, au niveau de l'entrefer 27, une empreinte 28 pour la mise en place dudit composant 1. Son profil correspond à celui conféré à la feuille de matière 2 dans ledit moule 14 de fabrication dudit composant 1.

Différents points d'injection 29 sont prévus sur l'autre partie 26 dudit second moule 24, par exemple, d'une part, en vis-à-vis de l'empreinte 28 pour la formation de la partie du porteur 20 se trouvant sous ledit composant 1 et, d'autre part, au delà pour la formation du reste dudit porteur 20.

Au niveau de ladite partie 26 présentant les points d'injection 29, des rainures de positionnement pourront être prévues pour coopérer avec lesdites encoches 12 du composant 1.

On peut ainsi obtenir une pièce d'habillage 19, par exemple, selon les étapes suivantes : on fabrique un composant 1 dans le moule 14, comme déjà évoqué plus haut, on ouvre l'autre moule 24 et on place ledit composant 1 dans l'empreinte 28, on referme ledit second moule 24 et on injecte ledit porteur 20 à la fois sous ledit composant 1 et autour, éventuellement séquentiellement, on refroidit ledit second moule 24 pour enfin ouvrir celui-ci de manière à pouvoir démouler la pièce 19 formée.

Selon un mode particulier de réalisation de l'invention, lesdites première et seconde étapes pourront être menées en temps masqué, éventuellement dans un même outillage, tel qu'un moule portefeuille.

Naturellement, d'autres modes de mise en oeuvre, à la portée de l'Homme de l'Art, auraient pu être imaginés sans pour autant sortir du cadre de l'invention.

## Revendications

1. Composant décoratif (1), destiné à constituer une pièce d'habillage ou à être intégré dans une pièce d'habillage intérieur d'un véhicule, constitué au moins d'une feuille de matière (2), et présentant au moins localement, sur au moins une de ses faces, dite face d'aspect (4), un aspect esthétique et/ou de confort, **caractérisé par le fait que** la feuille de matière est uniquement munie de moyens de rigidification (3), lesdits moyens de rigidification (3) sont constitués d'un cordon (5), continu ou discontinu, prévu sur la face (7) de la feuille de matière (2) opposée à sa face d'aspect (4) sur une partie au moins de la périphérie de ladite feuille de matière (2) pour figer sa forme selon la forme voulue pour ledit composant (1).

2. Composant, selon la revendication 1, comprenant localement un ou des pavés de matériaux (6) présentant une certaine souplesse, assujettis à ladite feuille de matière (2).

3. Composant, selon la revendication 1, dans lequel les bords de ladite feuille de matière (2) sont assujettis au niveau d'une partie dudit cordon (5), formant une jupe (8) pour ledit composant (1).

4. Composant, selon la revendication 1, comprenant au niveau dudit cordon (5) des moyens de positionnement (10), discontinus ou continus, dudit composant (1).

5. Procédé de fabrication d'un composant décoratif, selon la revendication 1, dans lequel on met en forme ladite feuille de matière (2) selon un profil désiré et on réalise ledit cordon périphérique (5).

6. Procédé, selon la revendication 5, dans lequel on découpe une ou des portions de ladite feuille de matière (2), prévue en excès au delà du cordon (5).

7. Utilisation du composant décoratif, selon la revendication 1, dans un outil vis-à-vis duquel ledit composant est maintenu et positionné par ledit cordon périphérique.

8. Procédé de fabrication d'une pièce d'habillage intérieur (19) d'un véhicule, par exemple, panneau de portière, constituée d'une couche de matière, dite porteur (20), présentant localement au moins une zone d'aspect (21) **caractérisée par le fait que** :
- on réalise, lors d'une première étape, un composant décoratif selon l'une quelconque des revendications 1 à 4,
- on assure, lors d'une seconde étape distincte de la première, la liaison entre ledit porteur (20) et ledit composant décoratif (1) de manière à ce que la zone d'aspect (21) de ladite pièce (19) soit définie au moins en partie par ladite face d'aspect (4) dudit composant (1).

9. Procédé, selon la revendication 8, dans lequel on assure la liaison entre ledit composant (1) et ledit porteur (20) au moins au niveau du cordon (5) dudit composant (1).

10. Procédé, selon la revendication 9, dans lequel on forme une gorge (22) au niveau d'une zone de contact entre ledit cordon (5) et une partie visible dudit porteur (20), le bord de ladite feuille de matière (2) étant prévu inséré dans ladite gorge (22).

11. Procédé, selon la revendication 8, dans lequel on assure le positionnement relatif du composant (1) dans ladite pièce (19) grâce audit cordon (5).

12. Procédé, selon la revendication 8, dans lequel lesdites premières et secondes étapes sont menées en temps masqué, dans un même outillage.

## Claims

1. A decorative component (1), intended to form a dressing part or to be integrated to an inner dressing part in a vehicle, consisting of at least one sheet of material (2) and exhibiting at least locally, over at least one of its faces, so-called appearance face (4), an aesthetic and/or comfort appearance, **characterised in that** the sheet of material is solely fitted with stiffening means (3), said stiffening means (3) consist of a cord (5), continuous or discontinuous, arranged on the face (7) of the sheet of material (2) opposite to its appearance face (4) over a portion at least of the periphery of said sheet of material (2) to fix its shape according to the shape requested for said component (1).

2. A component according to claim 1, comprising locally one or several blocks of material (6) exhibiting a certain flexibility, slaved to said sheet of material (2).

3. A component according to claim 1, wherein the edges of said sheet of material (2) are slaved at a portion of said cord (5), forming a skirt (8) for said component (1).

4. A component according to claim 1, comprising at said cord (5) means (10), discontinuous or continuous, for positioning said component (1).

5. A manufacturing method for a decorative component, according to claim 1, wherein said sheet of material (2) is shaped into a desired profile and wherein said peripheral cord (5) is produced.

6. A method according to 5, wherein one or several portions of said sheet of material (2) provided in excess beyond the cord (5) are cut out.

7. A use of the decorative component, according to claim 1, in a tool opposite which said component is held and positioned by said peripheral cord.

8. A manufacturing method for an inner dressing part (19) of a vehicle, for example a door panel, consisting of a layer of material, so-called carrier (20), exhibiting locally at least one appearance zone (21) **characterised in that**:
- in a first stage, a decorative component according to any of the claims 1 to 4 is made,
- in a second stage distinct from the first, said carrier (20) and said decorative component (1) are linked so that the appearance zone (21) of said part (19) is defined at least partially by said appearance face (4) of said component (1).

9. A method according to claim 8, wherein said component (1) and said carrier (20) are linked at least at the cord (5) of said component (1).

10. A method according to claim 9, wherein a groove (22) is formed at a contact zone between said cord (5) and a visible portion of said carrier (20), the edge of said sheet of material (2) being inserted into said groove (22).

11. A method according to claim 8, wherein the component (1) is positioned relatively in said part (19) thanks to said cord (5).

12. A method according to claim 8, wherein said first and second stages are realised in masked time, in the same tooling.

## Patentansprüche

1. Dekorationsbestandteil (1), vorgesehen, um ein Bekleidungsstück zu bilden oder in einen Innenbekleidungsstück von einem Fahrzeug integriert zu werden, bestehend wenigstens aus einem Materialblatt (2) und aufweisend wenigstens stellenweise auf wenigstens einer seiner Seiten, die als Stirnseite (4) bezeichnet wird, ein ästhetisches und/oder komfortables Aussehen, **dadurch gekennzeichnet, daß** das Materialblatt lediglich mit Versteifungsmitteln (3) ausgestattet ist, wobei die besagten Versteifungsmittel (3) aus einer kontinuierlichen oder unterbrochenen Schnur (5) bestehen, die auf der seiner Stirnseite (4) gegenüberliegenden Seite (7) des Materialblattes (2), über wenigstens einen Teil des Umkreises des besagten Materialblattes (2) vorgesehen ist, um seine Form nach der für den besagten Bestandteil (1) erwünschten Form erstarren zu lassen.

2. Bestandteil nach Anspruch 1, umfassend stellenweise einen oder mehrere Materialpflaster (6), aufweisend eine gewisse Elastizität, an dem besagten Materialblatt (2) befestigt sind.

3. Bestandteil nach Anspruch 1, bei dem die Ränder des besagten Materialblattes (2) im Bereich eines Teils der besagten Schnur (5) befestigt sind, bildend einen Saum (8) für den besagten Bestandteil 1.

4. Bestandteil nach Anspruch 1, umfassend im Bereich der besagten Schnur (5) unterbrochene oder kontinuierliche Positionierungsmittel (10) für den besagten Bestandteil (1).

5. Verfahren zur Herstellung eines Dekorationsbestandteils nach Anspruch 1, bei dem das besagte Materialblat (2) nach einem gewünschten Profil geformt wird und die besagte peripherische Schnur (5) hergestellt wird.

6. Verfahren nach Anspruch 1, bei dem einer oder mehrere Teile von dem besagten Materialblatt (2) ausgeschnitten werden, das im Überschuß über der Schnur (5) hinaus vorgesehen ist.

7. Verwendung des Dekorationsbestandteils nach Anspruch 1 in einem Werkzeug, gegenüber dem der besagte Bestandteil durch die besagte peripherische Schnur gehalten und positioniert wird.

8. Verfahren zur Herstellung eines Innenbekleidungsstückes (19) eines Fahrzeugs, zum Beispiel einer Türplatte, bestehend aus einer Materialschicht, die als Träger (20) bezeichnet wird, die stellenweise wenigstens einen Aussehensbereich (21) aufweist, **dadurch gekennzeichnet, daß**:
- in einem ersten Schritt ein Dekorationsbestandteil nach irgendeinem der Ansprüche 1 bis 4 hergestellt wird,
- in einem zweiten, sich von dem ersten unterscheidenden Schritt die Verbindung zwischen dem besagten Träger (20) und dem besagten Dekorationsbestandteil (1) gesichert wird, so daß der Aussehensbereich (21) des besagten Stückes (19) wenigstens zum Teil durch die besagte Stirnseite (4) des besagten Bestandteils (1) gebildet sei.

9. Verfahren nach Anspruch 8, bei dem die Verbindung zwischen dem besagten Bestandteil (1) und dem besagten Träger (20) wenigstens im Bereich der Schnur (5) des besagten Bestandteils (1) gesichert ist.

10. Verfahren nach Anspruch 9, bei dem eine Nut (22) im Bereich einer Kontaktzone zwischen der besagten Schnur (5) und einem sichtbaren Teil des besagten Trägers (20) gebildet ist, wobei der Rand des besagten Materialblattes (2) in der besagten Nut (22) eingefügt vorgesehen ist.

11. Verfahren nach Anspruch 8, bei dem die relative Positionierung des Bestandteils (1) in dem besagten Stück (19) durch die besagte Schnur (5) gesichert wird.

12. Verfahren nach Anspruch 8, bei dem die besagten erste und zweite Schritte in maskierter Zeit in dem gleichen Werkzeug erfolgen.
